# EUROPEAN PATENT SPECIFICATION

(11) **EP 2 245 325 B1**
(45) Date of publication and mention of the grant of the patent: **04.12.2013**
(21) Application number: 09715652.5
(22) Date of filing: 27.02.2009
(51) Int. Cl.: F16D 23/06

(54) **SYNCHRONISM SYSTEM FOR A VEHICLE POWER TRANSMISSION MECHANISM**
SYNCHRONISIERUNGSEINRICHTUNG FÜR EINEN KFZ-ANTRIEB
SYSTÈME DE SYNCHRONISME POUR MÉCANISME DE TRANSMISSION DE PUISSANCE DE VÉHICULE

(30) Priority: 28.02.2008 ES 200800579
(43) Date of publication of application: 03.11.2010
(73) Proprietor: PMG Asturias Powder Metal S.A.U., 33682 Mieres (ES)
(72) Inventor: CASTRO, Diego, E-33206 Gijon (ES); LOPEZ MARTINEZ, Juan, Ignacio, E-33011 Oviedo (ES); PRESA, Yvan, E-33012 Oviedo (ES); VILLARRICA VINES, Jorge, E-33318 Villaviciosa (ES)
(86) International application number: PCT/EP2009/001421
(87) International publication number: WO 2009/106345

(56) References cited:
- EP-A- 0 999 374
- DE-A1- 10 136 906
- DE-U1- 20 216 782
- JP-A- 61 294 246

## Description

### TECHNICAL FIELD OF THE INVENTION

The present invention relates to the field of auxiliary components in the motor vehicle sector and, more specifically, to synchronism systems for vehicle power transmission mechanisms. The object relates to a synchronization system based on a locking device with at least one elastic element.

### BACKGROUND OF THE INVENTION

The motor vehicle market quickly evolves setting increasingly ambitious challenges as regards the features the components forming a motor vehicle should perform.

At present, power transmission mechanisms, such as gear boxes, reducers, etc., are equipped with synchronization systems that ensure greater reliability and performance of the gear changes. The function of synchronizations systems is to permit that, on the same power shaft, two gears, one solidly joined to the shaft and another idle with different rotation speeds, equal their rotation speeds to allow the gear change by a sliding sleeve and drag rings.

In said operation, the sliding sleeve advances with axial movement towards the movement gear. The synchronizer hub, which is rigidly joined to the power shaft, rotates with the same rotation speed as the latter, guides and transmits the rotation speed to the sliding sleeve during its axial movement. Throughout the process, the sliding sleeve comes into contact with the drag ring and advances axially towards the movement gear. One of the most important elements in the synchronization process is the locking device, a functional element that facilitates the guiding of the sliding sleeve being solidly joined thereto until meeting with the drag ring.

The locking device is generally composed of an elastic element, a positioning element and a casing which retains the elastic element and the positioning element. The casing is for example housed in a groove made in the outer toothing of the synchronizer hub and which penetrates one measure towards the centre of the piece. The positioning element contacts with the sleeve, being housed in a striation thereof. The elastic element rests on the casing and, if applicable, against the positioning element maintaining a certain tension between them, and achieving the contact between the synchronizer hub and the clutch sleeve. This means that until the force of the elastic element is not overcome, the locking element and the sleeve remain solidly joined. Most locking elements currently used are based on a linear compression spring as an elastic element housed in a T-shaped seat, which has a sphere in its upper part as positioning element. This type of device has drawbacks related to the high depth that the seats that house the current locking devices need, which causes a decrease in mechanical resistance of the synchronization hub in radial direction.

This type of lockings based on compression springs are found in the patent applications with publication numbers DE102005054743, DE102005061481, DE102005061977, DE10255802, EP1310693 and US5862900.

There currently exists another type of device, based on elastic elements different to compression springs. One of them is described in international patent application WO 03/104670, based on a retention element which consists of an arc-type spring with elastic properties located in the interior of a support element and with a cover finished with an element in the form of a sphere.

Similar is the device disclosed in patent application with publication number FR2785026, wherein the element with the form of a sphere has been replaced by a continuity of the actual elastic element. These systems also cause a high need for space for the housing of the elastic element and the sphere, if applicable. DE 202 16 782 U discloses a system according to the preamble of claim 1.

A system is therefore desirable that achieves a suitable contact between the synchronizer hub and the clutch sleeve of a synchronism system of power transmission mechanisms, avoiding the drawbacks existing in the previous systems of the state of the art.

### DESCRIPTION OF THE INVENTION

The present invention resolves the problems existing in the state of the art by a synchronism system for a vehicle power transmission mechanism according to claim 1. The system has a locking device, which provides an elastic connection between a sliding clutch sleeve of a power transmission mechanism and a synchronizer hub of said power transmission mechanism. The locking device has the function of a strut.

The locking device comprises at least one casing which has at least one elastic element therein. The at least one casing being disposed preferably in a housing made in said synchronizer hub. Preferably, the casing is movable relative to the synchronizer hub and to the clutch sleeve. According to the invention the locking device also has a positioning element housed in the casing and which is in contact with the torsion spring, contacting with the clutch sleeve, so that the torsion spring exerts the tension on the clutch sleeve through the positioning element. In this regard, the torsion spring exerts the tension through the casing, if there exists a separate casing housed in the synchronizer hub. Otherwise, if the casing is part of the synchronizer hub, torsion spring exerts the tension directly on the synchronizer hub. The embodiment of a locking device with a positioning element has the advantage of providing greater contact, and therefore, a more uniform tension, in addition to avoiding the friction of the torsion spring against the clutch sleeve, which would cause the deterioration of both elements.

In another preferred embodiment and for a specific application of the locking device, the at least one casing is created at least partly by the synchronizer hub, i.e. the at least one casing is part of the synchronizer hub itself.

The elastic element is a torsion spring with a spring axis. The spring force exerts tension between the clutch sleeve and the synchronizer hub. This type and geometry of a torsion spring allows a low depth of the locking device. Consequently, mechanical resistance of the synchronizer hub is increased, in particular in radial direction.

Preferably, the spring force is directed generally in a transverse direction relative to the spring axis. The torsion spring acts in the manner like a leg spring.

Preferably, the torsion spring is movable relative to the synchronizer hub and/or to the clutch sleeve along the radial direction of the synchronizer hub and the clutch sleeve.

According to different embodiments of the invention, and depending on specific requirements, there may be more than one locking device (for example three locking devices) each with at least a torsion spring to make the contact.

Preferably, the locking devices are disposed uniformly throughout the periphery of the synchronizer hub.

The positioning element may comprise parts with different geometries such as a plate with a protuberance, or a semi-spherical, cylindrical or semi-cylindrical body.

For example, the locking device may comprise a positioning sphere as a positioning element which is housed in the casing partially protruding therefrom, so that the torsion spring exerts the tension on the clutch sleeve through the positioning sphere.

In accordance with a particular embodiment of the invention, the torsion spring can be formed by a single body of helicoidal winding and a pair of end arms of this winding body. According to one embodiment, the body either exerts tension towards the clutch sleeve by resting on the two end arms that exert tension towards the synchronizer hub or the body can rest on a seat made in the casing, whilst one of the arms exerts tension towards the synchronizer hub and the other exerts tension towards the clutch sleeve.

According to an alternative embodiment of the invention, the torsion spring has two helicoidal winding bodies joined by a central joining portion, and an end arm at each one of the winding bodies. In this case, the central joining portion exerts tension towards the clutch sleeve and the end arms towards the synchronizer hub or, according to an opposite disposal of the torsion spring, the central joining portion exerts tension towards the synchronizer hub whilst the end arms exert tension towards the clutch sleeve. For realizing these alternatives, the central joining portion and the end arms are preferably positioned at the same radial side relative to the spring axis of the torsion spring.

In another preferred embodiment, the central joining portion and/or the end arms exert tension towards either the synchronizer hub or the clutch sleeve, while the helicoidal winding bodies exert tension towards either the clutch sleeve or the synchronizer hub. For realizing these alternatives, the central joining portion and the end arms are preferably positioned at opposite radial sides relative to the spring axis of the torsion spring.

### DESCRIPTION OF THE FIGURES

Below, to facilitate the understanding of the invention, by way of non-limitative illustration, an embodiment of the invention shall be described that makes reference to a series of figures.
Figure 1 is a perspective view of a power transmission system showing the object of the present invention, the synchronizer hub and the clutch sleeve being separated from one another, and the locking device separate.
Figure 2 is a perspective view of the same power transmission system and the locking device of figure 1, wherein the synchronizer hub and the clutch sleeve are connected by means of the locking device disposed between both.
Figure 3 shows an embodiment of the locking device of the invention in mounted and dismantled position.
Figure 4 shows another embodiment of the locking device of the invention in mounted and dismantled position.
Figure 5 shows another different embodiment of the locking device of the invention in mounted and dismantled position.
Figure 6 shows another additional embodiment of the locking device of the invention in mounted and dismantled position.
Figure 7 shows another embodiment of the locking device of the invention in mounted and dismantled position.
Figure 8 shows another embodiment of the locking device of the invention in mounted and dismantled position.
Figure 9 shows another embodiment of the locking device of the invention in dismantled position.
Figure 10 shows in a perspective view partly another embodiment of the locking device of the invention.

These figures make reference to a series of elements which are:
1. Clutch sleeve
2. Synchronizer hub solidly joined to the power shaft
3. Casing of locking device
4. Elastic element, torsion spring
5. Housing of the synchronizer hub
6. Positioning element
7. Helicoidal winding body of the torsion spring
8. Arms of the torsion spring
9. Central joining portion of the helicoidal winding bodies
10. Positioning sphere
11.Locking device
12.Spring axis
13.Coil
14. Transverse direction
15.Cap
16.Side wall
17. Surface zone
18. Bowed section
19. Pin
20. Inner space
21.Side flange
22. Hole
23. Contact flange
24. Bending zone

### DESCRIPTION OF PREFERRED EMBODIMENTS OF THE INVENTION

The object of the invention is a synchronism system for vehicle power transmission mechanisms.

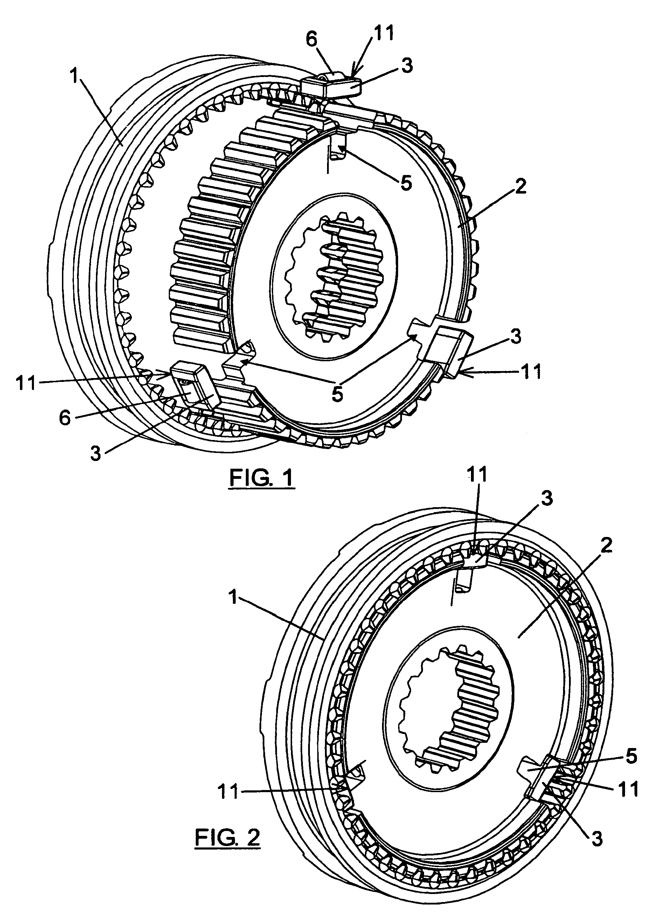

Figures 1 and 2 show the arrangement of the locking device 11 in a vehicle power transmission mechanism, said locking device 11 making the elastic contact between a sliding clutch sleeve 1 of the power transmission mechanism and a synchronizer hub 2 of said power transmission mechanism.

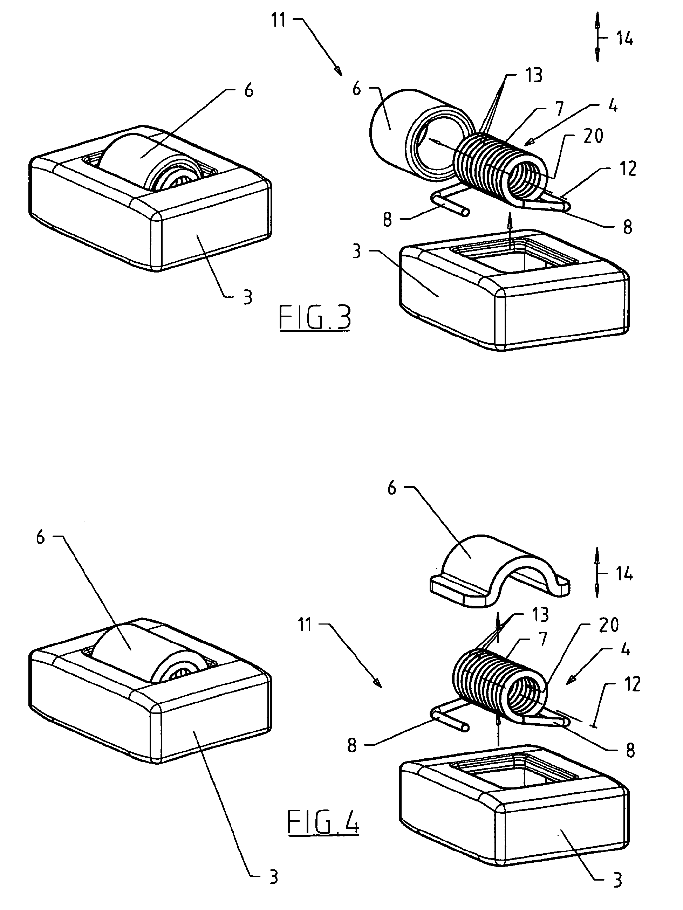

As can be observed in figures 1 and 2, and in greater detail in particular embodiments of figures 3 to 10, the locking device has at least one casing 3, which houses therein at least one elastic element 4. Casing 3 is created separately from the synchronizer hub 2.

This casing contacts with the synchronizer hub 2 being disposed in a housing 5 made for said purpose in the radial periphery of this synchronizer hub 2.

On the other hand, the elastic element 4 is a torsion spring 4, which exerts tension on the clutch sleeve 1 and on the synchronizer hub 2. The torsion spring 4 has a spring axis 12. This spring axis 12 is consistent with a central axis of a winding body 7, which comprises several coils 13. The spring force generating mechanical tension towards clutch sleeve 1 and synchronizer hub 2 is directed in a transverse direction 14 relative to the spring axis 12.

According to a preferred embodiment of the invention, the torsion spring 4 directly contacts with the clutch sleeve 1 exerting tension towards it.

In an alternative embodiment, in addition to the casing 3 and the torsion spring 4, the locking device 11 has a positioning element 6 which is in contact with the torsion spring 4 and is that which contacts with the clutch sleeve 1. In this way, the torsion spring 4 exerts tension on the synchronizer hub 2 through the casing 3, and on the clutch sleeve 1 through the positioning element 6 achieving a more uniform contact, and therefore a more uniform transmission of tension, in addition to avoiding the friction between the torsion spring 4 and the clutch sleeve 1 which caused the scratching and deterioration of both, obtaining a greater durability of the components.

Figures 3 to 10 show different embodiments of the invention depending on different embodiments of this positioning element 6 and the torsion spring 4.

In a particular embodiment of the invention, the positioning element 6 comprises a plate with a protuberance which partially protrudes from the casing 3 and it is what makes the contact with the clutch sleeve 1 (figure 4).

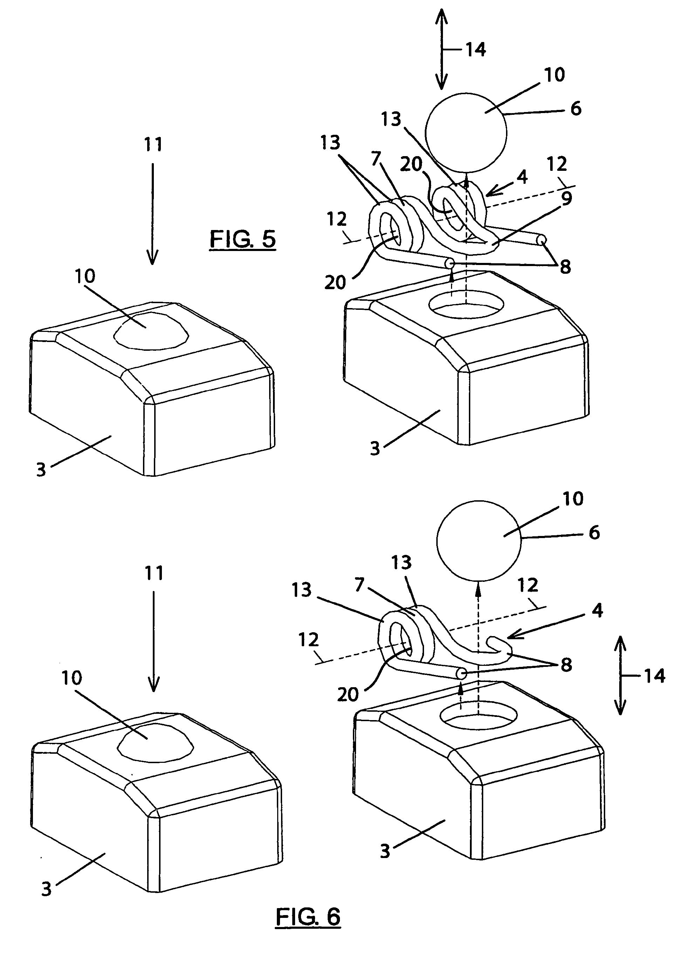

In another alternative embodiment, represented in figures 5 and 6, the positioning element 6 comprises a positioning sphere 10 which is disposed on the elastic element 4 and is housed in the casing 3 partially protruding therefrom, connecting with the clutch sleeve 1, and being what transmits the tension of the torsion spring 4 to the clutch sleeve 1.

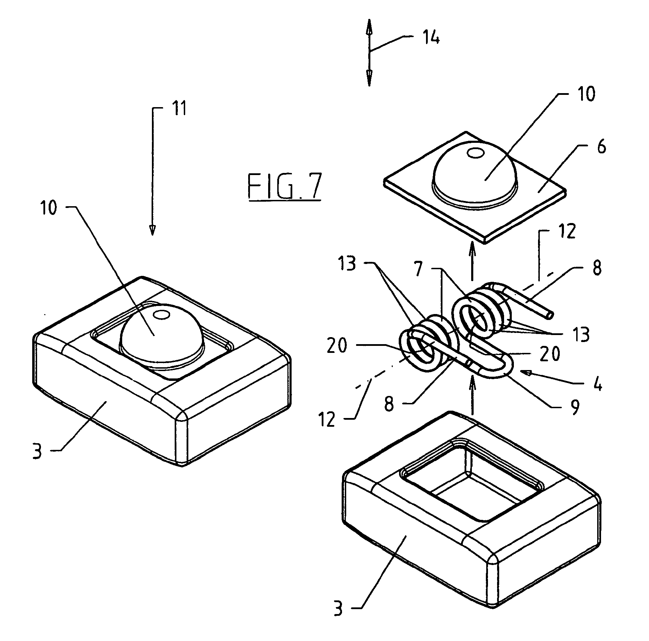

In an alternative embodiment, which is represented in figure 7, and is based on a combination of the two previous embodiments, the locking device 11 comprises both the plate 6 and the positioning sphere 10, the plate 6 being in contact with the torsion spring 4 and the positioning sphere 10 on the plate 6 in contact with it, and in contact with the clutch sleeve 1 whereto it transmits the tension received from the plate 6 which also receives the torsion spring 4. The positioning sphere 10 is preferably securely fixed at the plate 6.

In accordance with a different embodiment to the previous ones, the positioning element 6 comprises a cavity which houses at least part of the torsion spring 4, housing said positioning element 6 in the casing 3 and protruding at least partially therefrom (figure 3).

According to this embodiment, the positioning element 6 which comprises the cavity may have a semi-spherical, cylindrical geometry, such as that represented in figure 3, or semi-cylindrical, such as that represented in figure 4 or any other geometry that provides a suitable contact between the synchronizer hub and the sliding sleeve.

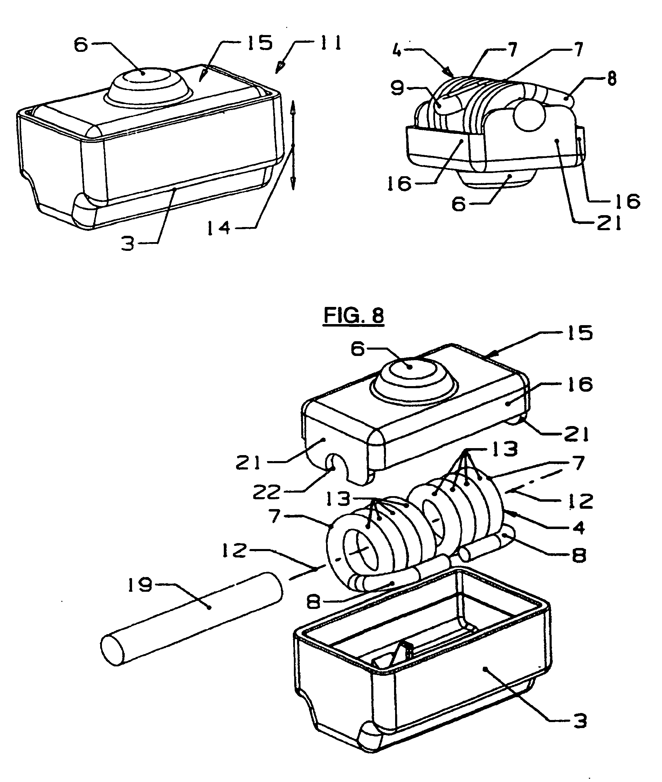

According to another embodiment, the positioning element 6 is arranged at the outer side of a cap 15, which is movable arranged in the casing 3 (figure 8). The movements of the cap 15 are directed in transverse direction 14 and stabilized by side walls 16, which act as guiding areas for the cap 15, in this connection corresponding with the respective inner walls of the casing 3.

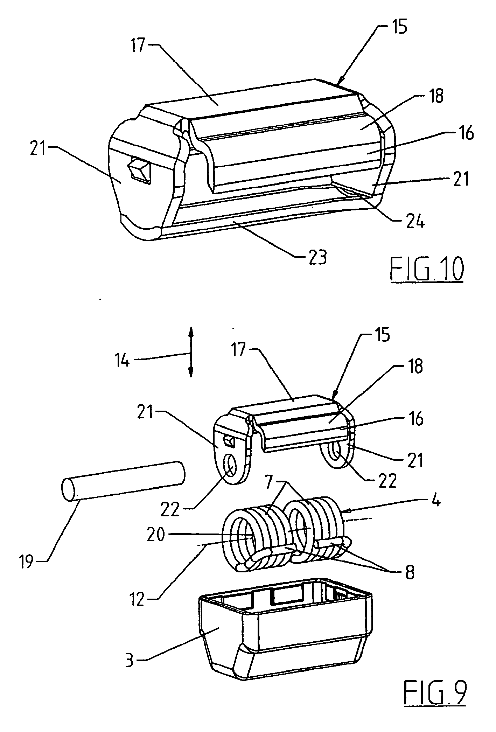

According to another embodiment of the cap 15, the positioning element 6 is created by a flat surface zone 17 of the cap 15 itself (figures 9, 10). In figure 9 and 10, the side walls 16 are joined by bowed sections 18 with the surface zone 17. In an alternative embodiment, there is arranged a separately positioning element at the surface zone 17, for example shaped in a manner like in the figures 3-8.

As regards the torsion spring 4, according to the form thereof there are different embodiments of the invention.

According to a particular embodiment of the torsion spring 4, it is formed by a single helicoidal winding body 7 and a pair of end arms 8 of this helicoidal winding body 7.

Figures 3 and 4 represent this embodiment of the torsion spring 4, wherein it is the helicoidal winding body 7 that which exerts tension towards the clutch sleeve 1, resting on the pair of arms 8 that exert tension towards the synchronizer hub 2.

In contrast, according to an alternative particular embodiment of this invention, not represented in the figures, the helicoidal winding body 7 is disposed on a seat of the casing 3 and one of the arms 8 exerts tension towards the clutch sleeve and the other arm 8 in the opposite direction, towards the synchronizer hub 2.

There are another different configurations of the torsion spring 4, which are shown in figures 5, 7, 8, 9, wherein this torsion spring comprises two helicoidal winding bodies 7, joined together by a central joining portion 9, and an end arm 8 at each one of these helicoidal winding bodies 7.

Several alternative versions of this configuration may exist. In one of them, the central joining portion 9 exerts tension towards the clutch sleeve 1, whilst the arms 8 exert tension towards the synchronizer hub 2 (figure 5). In contrast, in another alternative, the central joining portion 9 exerts tension towards the synchronizer hub 2 and the arms 8 exert tension towards the clutch sleeve 1 (figure 7).

In these last two embodiments of the torsion spring 4 with two helicoidal winding bodies 7, the central joining portion 9 and the arms 8 are positioned at the same side relative to the spring axis 12. In these last two embodiments, a positioning sphere 10 can also be placed, which in this case would be disposed on the central joining portion 9, or it can even be disposed in the cavity of a central positioning element 6, cylindrical, semi-cylindrical or semi-spherical.

In another embodiment, both the central joining portion 9 and the arms 8 are arranged at opposite sides relative to the spring axis 12 (figures 8, 9). In this case, the central joining portion 9 and the arms 8 have a seat in the casing 3 and exert tension towards the synchronizer hub 2, while the winding bodies 7 exert tension towards the clutch sleeve 1 via the cap 15 and/or its positioning element 6.

With respect to the last mentioned embodiment, the central joining portion 9 and the arms 8 alternatively can be arranged within the casing 3 such, that they can exert tension towards the clutch sleeve 1 via the cap 15 and/or its positioning element 6, while the winding bodies 7 exert tension towards the synchronizer hub 2.

With respect to the embodiments according to figures 8 and 9, a pin 19 (preferably acting as a shaft) is positioned within the inner space 20 of the winding bodies 7. This pin 19 is able to transmit the spring force by pressing in the inner area of the coils 13 during the movement of the torsion spring 4 along transverse direction 14. By providing a contact area at the inner surface of the coils 13, that creates the tension in the spring, it is possible to avoid direct contact at the outer surface of the coils 13 and therefore to avoid stress concentrations in the torsion spring 4 and eventually subsequent breakage of coils 13.

As can be seen in figure 8 - 10, the cap 15 can have different shapes. In each case, the cap 15 comprises two axial opposite positioned side flanges 21. In a mounted position, these side flanges 21 flank between them the torsion spring 4. According to figures 8 and 9, each of the side flanges 21 comprises a hole for mounting the pin 19. According to figure 10, the function of the pin 19 is substituted by a contact flange 23 as a part of the cap 15. This contact flange 23 is general semi-cylindrical shaped. At one axial end portion of contact flange 23, there is a bending zone 24 between the contact flange 23 and the adjacent portion of the cap 15. This bending zone 24 allows a bending of the contact flange 23 for mounting and position the torsion spring 4 between the two side flanges 21. In the mounting state of the torsion spring 4, the contact flange 23 is arranged within the inner space 20 of the torsion spring 4.

## Claims

1. Synchronism system for a vehicle power transmission mechanism, comprising a locking device with a casing (3) for housing therein at least one elastic element (4), said locking device contacts elastically with a sliding clutch sleeve (1) of said power transmission mechanism and a synchronizer hub (2) of said power transmission mechanism, whereby the elastic element is a torsion spring (4), that exerts tension towards the clutch sleeve (1) and towards the synchronizer hub (2), **characterized in that**
the locking device comprises a positioning element (6, 10) which
- is housed in the casing (3), and
- is in contact with the torsion spring (4) and contacts with the clutch sleeve (1), said torsion spring (4) exerts tension towards the clutch sleeve (1) through the positioning element (6, 10).

2. Synchronism system, according to claim 1, **characterized in that**
the torsion spring (4) has a spring axis (12) and a spring force directed in a transverse direction (14) to the spring axis (12).

3. Synchronism system, according to claim 1 or 2, **characterized in that**
the casing of the locking device is part of the synchronizer hub (2).

4. Synchronism system, according to claim 1 or 2, **characterized in that**
the casing (3) is disposed in a housing (5) made in the periphery of said synchronizer hub (2).

5. Synchronism system, according to claim 1, **characterized in that**
the positioning element (6, 10) is housed in the casing (3) and protrudes at least partially from it.

6. Synchronism system, according to claim 5, **characterized in that**
the positioning element (6) comprises a plate with a protuberance which partially protrudes from the casing (3).

7. Synchronism system, according to any of the claims 1, 5 or 6, **characterized in that**
the positioning element (6) is housed in the casing (3) protruding at least partially from it and comprises a cavity which houses therein at least part of the torsion spring (4).

8. Synchronism system, according to any of the claims 1, 5, 6 or 7, **characterized in that**
the positioning element (6, 10) comprises a geometry selected from part-spherical, semi-spherical, spherical, part-cylindrical, semi-cylindrical and cylindrical.

9. Synchronism system, according to claim 1, **characterized in that**
the positioning element (6) is arranged at the outer side of a cap (15) which is movable arranged in the casing (3).

10. Synchronism system, according to claim 9, **characterized in that**
the cap (15) comprises a flat surface zone (17).

11. Synchronism system, according to claims 9 and 10, **characterized in that**
the positioning element (6) is formed by the flat surface zone (17).

12. Synchronism system, according to claims 9 and 10, **characterized by**
a separate positioning element (6) at the flat surface zone (17).

13. Synchronism system, according to claim 1, **characterized in that**
the torsion spring (4) exerts tension towards the synchronizer hub (2) through the casing (3).

14. Synchronism system, according to any of the preceding claims, **characterized in that**
the torsion spring (4) comprises at least one helicoidal winding body (7) and a pair of end arms (8) of this helicoidal winding body (7).

15. Synchronism system, according to claim 14, **characterized in that**
the helicoidal winding body (7) is resting on the pair of arms (8), whereby the helicoidal winding body (7) exerts tension towards the clutch sleeve (1) and the pair of arms (8) exert tension towards the synchronizer hub (2).

16. Synchronism system, according to claim 14, **characterized in that**
the locking device comprises a seat within the casing (3) wherein the helicoidal winding body is disposed, whereby one of the arms (8) exerts tension towards the clutch sleeve (1) and the other arm (8) exerts tension towards the synchronizer hub (2).

17. Synchronism system, according to claim 14, **characterized in that**
the torsion spring (4) comprises two helicoidal winding bodies (7) joined together by a central joining portion (9) and comprises an end arm (8) at each one of these helicoidal winding bodies (7).

18. Synchronism system, according to claim 17, **characterized in that**
the central joining portion (9) exerts tension towards the clutch sleeve (1) and the end arms (8) exert tension towards the synchronizer hub (2).

19. Synchronism system, according to claim 17, **characterized in that**
the central joining portion (9) exerts tension towards the synchronizer hub (2) and the end arms (8) exert tension towards the clutch sleeve (1).

20. Synchronism system, according to claim 17, **characterized in that**
the central joining portion (9) and/or the end arms (8) exert tension towards the synchronizer hub (2) or towards the clutch sleeve (1) and the helicoidal winding bodies (7) exert tension towards the clutch sleeve (1) or towards the synchronizer hub (2).

21. Synchronism system, according to any of the claims 14-20, **characterized in that**
a pin (19) is positioned within the at least one helicoidal winding body (7).

22. Synchronism system, according to claim 21, **characterized in that**
the pin (19) is joined with the positioning element (6, 10).

## Patentansprüche

1. Synchronisierungseinrichtung für einen Fahrzeugkraftübertragungsmechanismus mit einer Verriegelungsvorrichtung mit einem Gehäuse (3) zur Unterbringung mindestens eines elastischen Elements (4), wobei die Verriegelungsvorrichtung mit einer Schiebemuffe (1) des Kraftübertragungsmechanismus und einer Synchronnabe (2) des Kraftübertragungsmechanismus in elastischen Kontakt tritt, wobei das elastische Element eine Torsionsfeder (4) ist, die Spannung zur Schiebemuffe (1) hin und zur Synchronnabe (2) hin ausübt, **dadurch gekennzeichnet, dass**
die Verriegelungsvorrichtung ein Positionierungselement (6, 10) umfasst, das
- im Gehäuse (3) untergebracht ist und
- mit der Torsionsfeder (4) in Kontakt ist und mit der Schiebemuffe (1) in Kontakt tritt, wobei die Torsionsfeder (4) durch das Positionierungselement (6, 10) Spannung zur Schiebemuffe (1) hin ausübt.

2. Synchronisierungseinrichtung nach Anspruch 1, **dadurch gekennzeichnet, dass** die Torsionsfeder (4) eine Federachse (12) und eine Federkraft hat, die in eine Querrichtung (14) zu der Federachse (12) ausgerichtet ist.

3. Synchronisierungseinrichtung nach Anspruch 1 oder 2, **dadurch gekennzeichnet, dass** das Gehäuse der Verriegelungsvorrichtung Teil der Synchronnabe (2) ist.

4. Synchronisierungseinrichtung nach Anspruch 1 oder 2, **dadurch gekennzeichnet, dass** das Gehäuse (3) in einer im Umfang der Synchronnabe (2) hergestellten Aufnahme (5) angeordnet ist.

5. Synchronisierungseinrichtung nach Anspruch 1, **dadurch gekennzeichnet, dass** das Positionierungselement (6, 10) im Gehäuse (3) untergebracht ist und mindestens teilweise daraus vorragt.

6. Synchronisierungseinrichtung nach Anspruch 5, **dadurch gekennzeichnet, dass** das Positionierungselement (6) eine Platte mit einem Vorsprung umfasst, der teilweise aus dem Gehäuse (3) vorragt.

7. Synchronisierungseinrichtung nach Anspruch 1, 5 oder 6, **dadurch gekennzeichnet, dass** das Positionierungselement (6) im Gehäuse (3) untergebracht ist, mindestens teilweise daraus vorragt und einen Hohlraum umfasst, in dem mindestens ein Teil der Torsionsfeder (4) untergebracht ist.

8. Synchronisierungseinrichtung nach Anspruch 1, 5, 6 oder 7, **dadurch gekennzeichnet, dass** das Positionierungselement (6, 10) eine Geometrie umfasst, die aus teilkugelförmig, halbkugelförmig, kugelförmig, teilzylindrisch, halbzylindrisch und zylindrisch ausgewählt ist.

9. Synchronisierungseinrichtung nach Anspruch 1, **dadurch gekennzeichnet, dass** das Positionierungselement (6) an der Außenseite einer Kappe (15) angeordnet ist, die beweglich im Gehäuse (3) angeordnet ist.

10. Synchronisierungseinrichtung nach Anspruch 9, **dadurch gekennzeichnet, dass** die Kappe (15) eine flache Oberflächenzone (17) umfasst.

11. Synchronisierungseinrichtung nach den Ansprüchen 9 und 10, **dadurch gekennzeichnet, dass** das Positionierungselement (6) durch die flache Oberflächenzone (17) gebildet ist.

12. Synchronisierungseinrichtung nach den Ansprüchen 9 und 10, **gekennzeichnet durch** ein separates Positionierungselement (6) an der flachen Oberflächenzone (17).

13. Synchronisierungseinrichtung nach Anspruch 1, **dadurch gekennzeichnet, dass** die Torsionsfeder (4) durch das Gehäuse (3) Spannung zu der Synchronnabe (2) hin ausübt.

14. Synchronisierungseinrichtung nach einem der vorhergehenden Ansprüche, **dadurch gekennzeichnet, dass** die Torsionsfeder (4) mindestens einen schraubenartigen Wicklungskörper (7) und ein Paar Endarme (8) dieses schraubenartigen Wicklungskörpers (7) umfasst.

15. Synchronisierungseinrichtung nach Anspruch 14, **dadurch gekennzeichnet, dass** der schraubenartige Wicklungskörper (7) auf dem Paar der Endarme (8) aufliegt, wobei der schraubenartige Wicklungskörper (7) Spannung zu der Schiebemuffe (1) hin ausübt und das Paar der Endarme (8) Spannung zu der Synchronnabe (2) hin ausübt.

16. Synchronisierungseinrichtung nach Anspruch 14, **dadurch gekennzeichnet, dass** die Verriegelungsvorrichtung einen Sitz im Gehäuse (3) umfasst, in dem der schraubenartige Wicklungskörper angeordnet ist, wobei einer der Arme (8) Spannung zu der Schiebemuffe (1) hin ausübt und der andere Arm (8) Spannung zu der Synchronnabe (2) hin ausübt.

17. Synchronisierungseinrichtung nach Anspruch 14, **dadurch gekennzeichnet, dass** die Torsionsfeder (4) zwei schraubenartige Wicklungskörper (7) umfasst, die durch einen mittleren Verbindungsabschnitt (9) miteinander verbunden sind, und einen Endarm (8) an jedem dieser schraubenartigen Wicklungskörper (7) umfasst.

18. Synchronisierungseinrichtung nach Anspruch 17, **dadurch gekennzeichnet, dass** der mittlere Verbindungsabschnitt (9) Spannung zu der Schiebemuffe (1) hin ausübt und die Endarme (8) Spannung zu der Synchronnabe (2) hin ausüben.

19. Synchronisierungseinrichtung nach Anspruch 17, **dadurch gekennzeichnet, dass** der mittlere Verbindungsabschnitt (9) Spannung zu der Synchronnabe (2) hin ausübt und die Endarme (8) Spannung zu der Schiebemuffe (1) hin ausüben.

20. Synchronisierungseinrichtung nach Anspruch 17, **dadurch gekennzeichnet, dass** der mittlere Verbindungsabschnitt (9) und/oder die Endarme (8) Spannung zu der Synchronnabe (2) hin oder zu der Schiebemuffe (1) hin ausüben und die schraubenartigen Wicklungskörper (7) Spannung zu der Schiebemuffe (1) hin oder zu der Synchronnabe (2) hin ausüben.

21. Synchronisierungseinrichtung nach einem der Ansprüche 14 - 20, **dadurch gekennzeichnet, dass** ein Stift (19) in dem mindestens einen schraubenartigen Wicklungskörper (7) positioniert ist.

22. Synchronisierungseinrichtung nach Anspruch 21, **dadurch gekennzeichnet, dass** der Stift (19) mit dem Positionierungselement (6, 10) verbunden ist.

## Revendications

1. Système de synchronisme pour un mécanisme de transmission de puissance d'un véhicule, comprenant un dispositif de verrouillage avec un carter (3) pour y recevoir au moins un élément élastique (4), ledit dispositif de verrouillage venant en contact élastiquement avec un manchon d'embrayage coulissant (1) dudit mécanisme de transmission de puissance et un moyeu de synchronisateur (2) dudit mécanisme de transmission de puissance, l'élément élastique étant un ressort de torsion (4), qui exerce une tension en direction du manchon d'embrayage (1) et du moyeu de synchronisateur (2), **caractérisé en ce que**
le dispositif de verrouillage comprend un élément de positionnement (6, 10) qui
- est logé dans le carter (3), et
- est en contact avec le ressort de torsion (4) et vient en contact avec le manchon d'embrayage (1), ledit ressort de torsion (4) exerçant une tension vers le manchon d'embrayage (1) par le biais de l'élément de positionnement (6, 10).

2. Système de synchronisme selon la revendication 1, **caractérisé en ce que** le ressort de torsion (4) présente un axe de ressort (12) et une force de ressort orientée dans une direction transversale (14) par rapport à l'axe de ressort (12).

3. Système de synchronisme selon la revendication 1 ou 2, **caractérisé en ce que** le carter du dispositif de verrouillage fait partie du moyeu de synchronisateur (2).

4. Système de synchronisme selon la revendication 1 ou 2, **caractérisé en ce que** le carter (3) est disposé dans un boîtier (5) réalisé dans la périphérie dudit moyeu de synchronisateur (2).

5. Système de synchronisme selon la revendication 1, **caractérisé en ce que** l'élément de positionnement (6, 10) est logé dans le carter (3) et fait saillie au moins partiellement hors de celui-ci.

6. Système de synchronisme selon la revendication 5, **caractérisé en ce que** l'élément de positionnement (6) comprend une plaque avec une protubérance qui fait saillie en partie hors du carter (3).

7. Système de synchronisme selon l'une quelconque des revendications 1, 5 ou 6,
**caractérisé en ce que** l'élément de positionnement (6) est logé dans le carter (3) en faisant saillie au moins en partie hors de celui-ci et comprend une cavité dans laquelle est logée au moins une partie du ressort de torsion (4).

8. Système de synchronisme selon l'une quelconque des revendications 1, 5, 6 ou 7, **caractérisé en ce que** l'élément de positionnement (6, 10) comprend une géométrie choisie parmi une géométrie partiellement sphérique, hémisphérique, sphérique, partiellement cylindrique, semi-cylindrique, et cylindrique.

9. Système de synchronisme selon la revendication 1, **caractérisé en ce que** l'élément de positionnement (6) est agencé au niveau du côté extérieur d'un capuchon (15) agencé de manière déplaçable dans le carter (3).

10. Système de synchronisme selon la revendication 9, **caractérisé en ce que** le capuchon (15) comprend une zone de surface plane (17).

11. Système de synchronisme selon les revendications 9 et 10, **caractérisé en ce que** l'élément de positionnement (6) est formé par la zone de surface plane (17).

12. Système de synchronisme selon les revendications 9 et 10, **caractérisé par** un élément de positionnement séparé (6) au niveau de la zone de surface plane (17).

13. Système de synchronisme selon la revendication 1, **caractérisé en ce que** le ressort de torsion (4) exerce une tension vers le moyeu de synchronisateur (2) à travers le carter (3).

14. Système de synchronisme selon l'une quelconque des revendications précédentes, **caractérisé en ce que** le ressort de torsion (4) comprend au moins un corps d'enroulement hélicoïdal (7) et une paire de bras d'extrémité (8) de ce corps d'enroulement hélicoïdal (7).

15. Système de synchronisme selon la revendication 14, **caractérisé en ce que** le corps d'enroulement hélicoïdal (7) repose sur la paire de bras (8), le corps d'enroulement hélicoïdal (7) exerçant une tension vers le manchon d'embrayage (1) et la paire de bras (8) exerçant une tension vers le moyeu de synchronisateur (2).

16. Système de synchronisme selon la revendication 14, **caractérisé en ce que** le dispositif de verrouillage comprend un siège à l'intérieur du carter (3), dans lequel est disposé le corps d'enroulement hélicoïdal, l'un des bras (8) exerçant une tension vers le manchon d'embrayage (1) et l'autre bras (8) exerçant une tension vers le moyeu de synchronisateur (2).

17. Système de synchronisme selon la revendication 14, **caractérisé en ce que** le ressort de torsion (4) comprend deux corps d'enroulement hélicoïdaux (7) réunis l'un à l'autre par une portion de jonction centrale (9) et comprend un bras d'extrémité (8) au niveau de chacun de ces corps d'enroulement hélicoïdaux (7).

18. Système de synchronisme selon la revendication 17, **caractérisé en ce que** la portion de jonction centrale (9) exerce une tension vers le manchon d'embrayage (1) et les bras d'extrémité (8) exercent une tension vers le moyeu de synchronisateur (2).

19. Système de synchronisme selon la revendication 17, **caractérisé en ce que** la portion de jonction centrale (9) exerce une tension vers le moyeu de synchronisateur (2) et les bras d'extrémité (8) exercent une tension vers le manchon d'embrayage (1).

20. Système de synchronisme selon la revendication 17, **caractérisé en ce que** la portion de jonction centrale (9) et/ou les bras d'extrémité (8) exercent une tension vers le moyeu de synchronisateur (2) ou vers le manchon d'embrayage (1) et les corps d'enroulement hélicoïdaux (7) exercent une tension vers le manchon d'embrayage (1) ou vers le moyeu de synchronisateur (2).

21. Système de synchronisme selon l'une quelconque des revendications 14 à 20, **caractérisé en ce qu'**une goupille (19) est positionnée à l'intérieur de l'au moins un corps d'enroulement hélicoïdal (7).

22. Système de synchronisme selon la revendication 21, **caractérisé en ce que** la goupille (19) est réunie aux éléments de positionnement (6, 10).
